# EUROPEAN PATENT APPLICATION

(11) **EP 4 092 162 A1**
(43) Date of publication of application: **23.11.2022**
(21) Application number: 21198582.5
(22) Date of filing: 23.09.2021
(51) Int. Cl.: C25B 1/04, F23D 14/32, F24H 8/00, F24H 1/43, F24D 3/08, F24H 1/16

(54) **MULTI-FUEL BOILER**

(30) Priority: 20.05.2021 IT 202100013094
(71) Applicant: F.M.T. S.r.l., 23037 Tirano SO (IT)
(72) Inventor: Floris, Gianluca, 23037 Tirano SO (IT)
(74) Representative: Perani & Partners S.p.A.

(57) **Abstract**

Multi-fuel boiler (100) comprising:
- a burner (102) configured to receive and mix a fuel and an oxidizer;
- a heat exchanger (103) placed near the burner (102) and configured to connect to a plumbing (104), the heat exchanger (103) being configured to receive a fluid to be heated and to send a heated fluid from/to said plumbing (104);
- an electrolysis device (105) connected to the burner (102) and configured to generate gaseous hydrogen and feed the generated gaseous hydrogen as fuel for the burner (102).

## Description

### Technical field

The present invention relates to a multi-fuel boiler for producing thermal energy, for example, which can be integrated with a heating and hot water production system of a dwelling. In particular, this description refers to a multi-fuel boiler of the condensing type.

### Background

The use of condensing boilers for heating and hot water production, e.g. in residential buildings, is well known in the state of the art. Condensing boilers of the known type comprise a burner and a heat exchanger placed near the burner.

The burner is configured to receive and mix a fuel and an oxidizer. In particular, the burner is configured to receive fuel from a gas distribution system. The boilers of the known type are configured to use a single fuel, e.g. natural gas or LPG.

The heat exchanger of the prior art is connected to a plumbing and is configured to receive a fluid to be heated and to send a heated fluid from/to said plumbing. The fluid in the heat exchanger is heated by the heat produced by combustion at the burner and is sent heated to the heating system and/or the sanitary plumbing.

### Problem of the prior art

The boilers of the known type have the gas distribution system to which the burner is connected as the sole source of fuel supply. In addition, these boilers are configured to use only one type of fuel. This makes the operation of the boiler of the known type dependent on the gas distribution system and on the single type of fuel.

Furthermore, combustion in known type boilers produces a not insignificant quantity of unburnt products with negative consequences on environmental pollution.

### Summary of the invention

Within this context, the technical task underlying the present invention is to provide a multi-fuel boiler which overcomes the drawbacks of the prior art.

In particular, it is an object of the present invention to propose a multi-fuel boiler which can employ a mixture of fuel gases with a higher calorific value than the fuels used in the prior art.

It is also an object of the present invention to propose a more efficient multi-fuel boiler.

The defined technical task and the specified aims are substantially achieved by a multi-fuel boiler comprising the technical characteristics set forth in one or more of the appended claims.

### Advantages of the invention

The present invention solves the technical problem. In fact, it is possible to build a multi-fuel boiler that can be independent of any gas distribution system.

It is also possible to realise a multi-fuel boiler using a mixture of fuel gases with a higher calorific value to increase the temperature of the flame produced by the burner and to reduce the pollutants produced by combustion.

### BRIEF DESCRIPTION OF THE DRAWINGS

Further characteristics and advantages of the present invention will become more apparent from the approximate and thus non-limiting description of a preferred, but not exclusive, embodiment of a multi-fuel boiler, as illustrated in the accompanying drawings, in which:

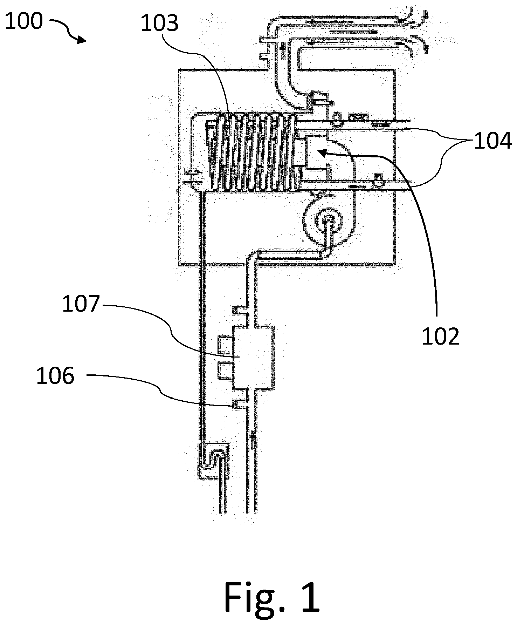

- Figure 1 is a schematic view of a multi-fuel boiler in accordance with the present invention;

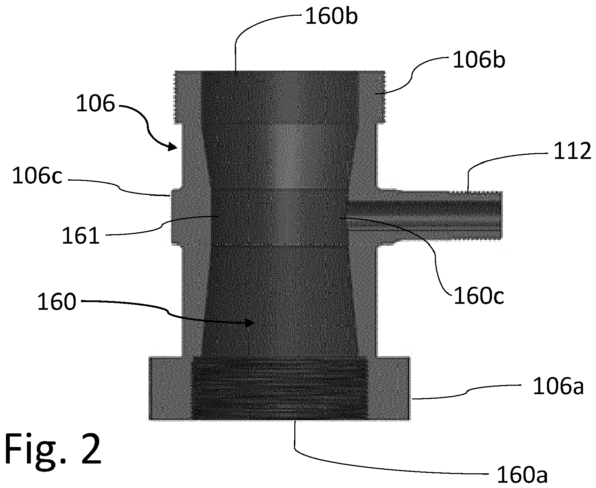

- Figure 2 shows a sectional view of a first detail of the boiler of Figure 1;

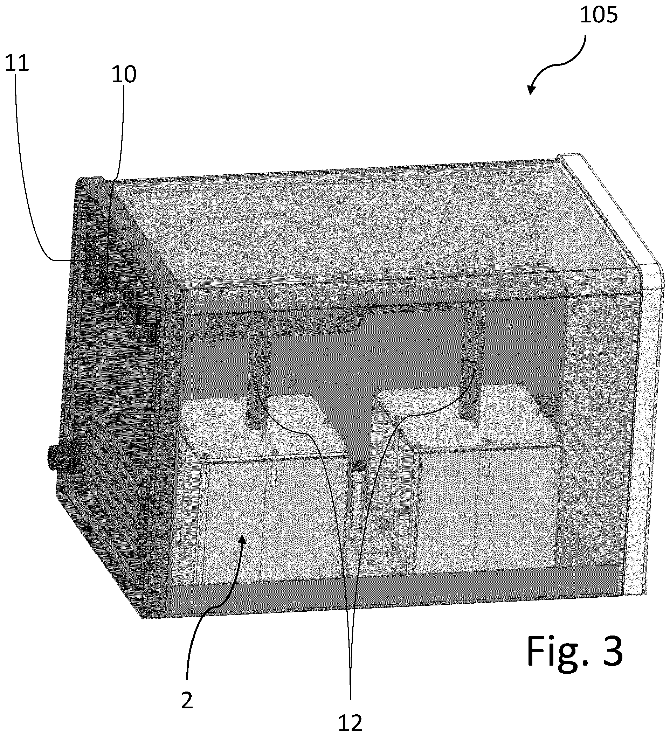

Figure 3 shows a perspective view of a second detail of Figure 1;
- Figure 4 shows a partially exploded perspective view of a third detail of the boiler of Figure 1;
- Figure 5 is a partially exploded and partial sectional perspective view of the detail of Figure 4;
- Figure 6 is a first perspective view of a detail of the element of Figure 4;
- Figure 7 is a second perspective view of the detail of Figure 6;

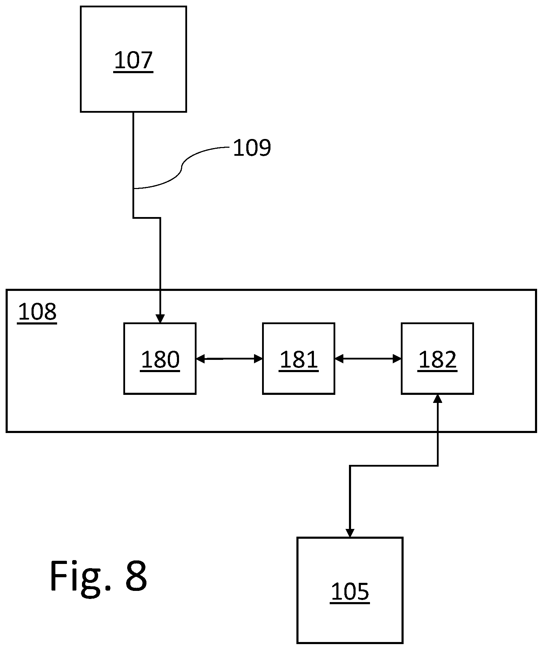

- Figure 8 shows a block diagram representing the operation of the boiler in Figure 1.

### DETAILED DESCRIPTION

With particular reference to the appended figures, a multi-fuel boiler of the present invention is indicated by the number 100.

The boiler 100 comprises a burner 102 and a heat exchanger 103 placed near the same burner 102. The burner 102 is configured to receive and mix a fuel and an oxidizer. As will become clearer below, the fuel can consist of a single gas or a mixture of several gases.

The heat exchanger 103 is configured to connect to a plumbing 104 and to receive a fluid to be heated and send a heated fluid from/to said plumbing 104. The plumbing 104 can be a heating system or a sanitary plumbing of a dwelling.

The boiler 100 further comprises an electrolysis device 105 connected to the burner 102 and configured to generate gaseous hydrogen and feed the generated gaseous hydrogen as fuel for the burner 102. In particular, the electrolysis device 105 is configured to carry out the electrolysis process of an electrolytic solution to produce gaseous hydrogen and oxygen. In detail, the electrolyte solution consists of water and an electrolyte. The gaseous hydrogen produced by the electrolysis device 105 may enrich or completely constitute the fuel received by the burner 102.

It should be noted that, by using gaseous hydrogen as fuel for the burner 102, it is possible to obtain a decrease in the quantity of pollutants produced by the boiler 100. In fact, the multi-fuel boiler 100 in accordance with the present invention allows to obtain a reduction of the pollutants of 30% compared to a boiler of the known type.

Furthermore, the usage of the gaseous hydrogen produced by the electrolysis device 105 as fuel for the burner 102 guarantees the possible operation of the boiler 100 even if no other sources of fuel are available. In other words, the boiler 100 can be independent of the gas distribution systems of prior art.

According to a preferred aspect, the boiler 100 comprises a mixing valve 106 connected to the burner 102 and to the electrolysis device 105. In detail, the mixing valve 106 is configured to receive and mix one or more gases and/or the gaseous hydrogen so as to generate a gaseous mixture and feed the gaseous mixture as fuel for the burner 102. Preferably, the mixing valve 106 is configured to allow one or more gases to be excluded in order to feed a single gas or the mixture of gases as fuel for the burner 102.

In the embodiment, the mixing valve 106 comprises an inlet portion 106a, an outlet portion 106b and a central portion 106c connecting the two. In particular, the inlet portion 106a is suitable for connection with a gas distribution system, while the outlet portion 106b is connected to the burner 102. Finally, the central portion 106c is connected to the electrolysis device 105. Preferably, the mixing valve 106 is configured to receive one or more gases from the gas distribution system. Still preferably, the electrolysis device 105 is configured to send the gaseous hydrogen to the mixing valve 106. In particular, the gaseous hydrogen has a pressure that is one to two per cent higher than the gas pressure of the gas distribution system. This is advantageous, as it facilitates the injection of gaseous hydrogen into the mixing valve 106 in the event that gases are already present in the mixing valve 106.

In addition, the mixing valve 106 is configured to generate a pressure reduction at the central portion 106c. Advantageously, the pressure reduction further facilitates the injection of gaseous hydrogen.

It should be noted that mixing one or more gases and/or gaseous hydrogen makes it possible to generate a fuel with a higher calorific value than the calorific value of the fuels of the prior art.

According to one aspect, the mixing valve 106 has a cavity 160 extending between a lower inlet 160a and an upper outlet 160b. In detail, the lower inlet 106a and the upper outlet 160b are located at the inlet portion 106a and at the outlet portion 106b, respectively.

Preferably, the mixing valve 106 is configured to receive gas through the lower inlet 160a from the gas distribution system. Still preferably, the mixing valve 106 is configured to feed the gaseous mixture as fuel for the burner 102 through the upper outlet 160b.

In addition, the cavity 160 of the mixing valve 106 has a narrowing 161 and a side opening 160c at the central portion 106c. Preferably, the narrowing 161 is suitable to generate a reduction in the internal pressure of the cavity 160 of the mixing valve 106 at the central portion 106c. Still preferably, the mixing valve 106 is configured to receive gaseous hydrogen from the electrolysis device 105 through the side opening 160c. In particular, the boiler 100 comprises an injection conduit 112 connecting the electrolysis device 105 and the central portion 106c. Preferably, the injection conduit 112 has a three per cent taper. The injection conduit 112 is configured to put the cavity 160 of the mixing valve 106 and the electrolysis device 105 in fluid communication and allow the gaseous hydrogen to be injected into the same cavity 160.

Advantageously, the pressure reduction at the central portion 106c facilitates the transfer of gaseous hydrogen generated by the electrolysis device 105 to the cavity 160 of the mixing valve 106. In other words, gaseous hydrogen flows from the device 105 within the injection conduit 112 towards the cavity 160 of the mixing valve 106 by means of the pressure reduction generated by the narrowing 161.

In the embodiment, the boiler 100 comprises a modulating valve 107 configured to regulate the amount of fuel fed to the burner 102 and acquire concentration data 109 representative of the concentration of gaseous hydrogen in the fuel. Preferably, the modulating valve 107 regulates the amount of fuel fed to the burner 102 based on the temperature of the fluid to be heated/heated fluid that the heat exchanger 103 receives/sends. Still preferably, the modulating valve 107 regulates the amount of fuel fed to the burner 102 based on the availability of oxidizer at the burner 102.

In addition, the boiler 100 comprises a control unit 108 comprising an acquisition module 180. The acquisition module 180 is in signal communication with the modulating valve 107 for receiving the concentration data 109 and is configured to receive regulation data representative of a stoichiometric ratio. In particular, the regulation data are representative of the ratio between the fuel and the oxidizer in the combustion reaction of the gas mixture.

The control unit 108 further comprises a processing module 181 in signal communication with the acquisition module 180 for generating a control signal based on the concentration data 109 and regulation data. In detail, the control unit 108 comprises an actuation module 182 in signal communication with the processing module 181 and the electrolysis device 105. The actuation module 182 is configured to modulate the generation of the gaseous hydrogen according to the control signal. Preferably, the control signal is representative of the operating time of the electrolysis device 105. Furthermore, the control signal may be representative of the current intensity to be supplied to the electrolysis device 105.

Advantageously, modulating the generation of gaseous hydrogen allows to maintain an optimal ratio not only between the components of the fuel, but also between fuel and oxidizer, so as to guarantee constant stoichiometric values. In other words, the actuation module 182 is configured to modulate the generation of gaseous hydrogen to ensure the operation of the burner 102 under ideal conditions. This is advantageous, as using a controlled and calibrated fuel for the burner 102 allows reaching a decrease in unburned and pollutants produced by the combustion process and increasing the energy efficiency of the boiler 100.

It should be noted that the multi-fuel boiler 100 in accordance with the present invention allows to obtain emissions of less than 70 mg/kWh.

A non-limiting embodiment of an electrolysis device 105 which can be used in conjunction with the boiler 100 subject-matter of the present invention will be described below.

It should be noted that a non-limiting embodiment of the electrolysis device 105 is shown in the accompanying figures.

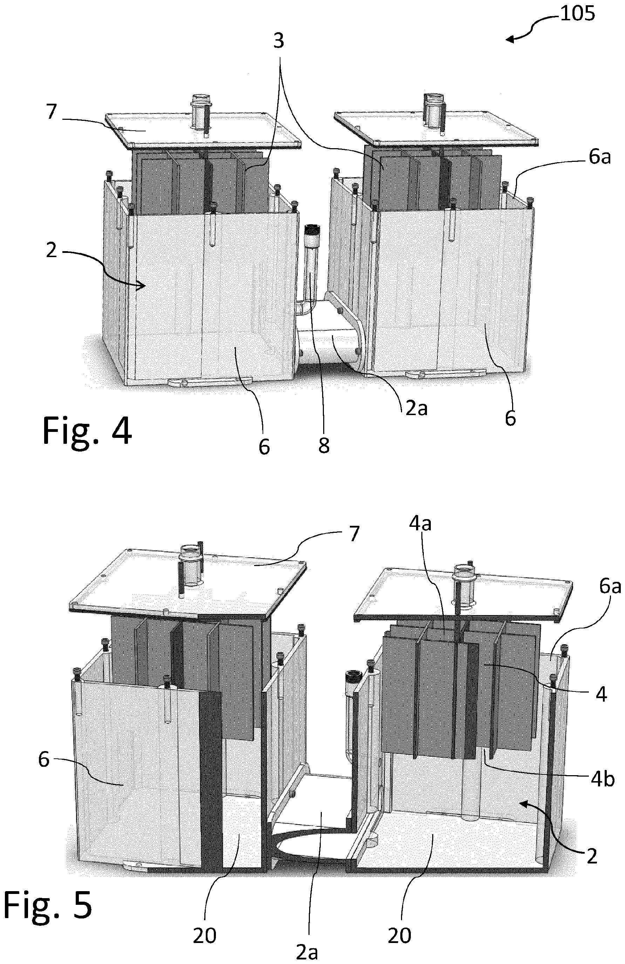

With particular reference to Figure 4, the electrolysis device 105 comprises a tank 2 configured to contain an electrolyte solution. Preferably, the tank 2 has a cavity 20 suitable for containing the electrolytic solution. In detail, the cavity 20 of the tank 2 has an upper inlet (not indicated in the attached figures). Still preferably, the tank 2 comprises two compartments 6 in fluid communication with each other and connected by a connecting conduit 2a. Each compartment 6 preferably has an upper access 6a. In particular, the upper accesses 6a of the compartments 6 define the upper inlet of the cavity 20 of the tank 2. The compartments 6 and the connecting conduit 2a define at least part of the cavity 20 of the tank 2. Preferably, the connecting conduit 2a is sized according to the volume of electrolyte solution that can be contained in each compartment 6.

The electrolysis device 105 comprises two electrodes 3 configured to connect electrically to a voltage generator. In particular, in use, one electrode 3 is connected to the negative pole of the voltage generator, while the other electrode 3 is connected to the positive pole. These electrodes 3 are housed in the tank 2. Preferably, at least one electrode 3 is housed in each compartment 6. The electrodes 3 are made of inert metal material, preferably AISI 316 steel.

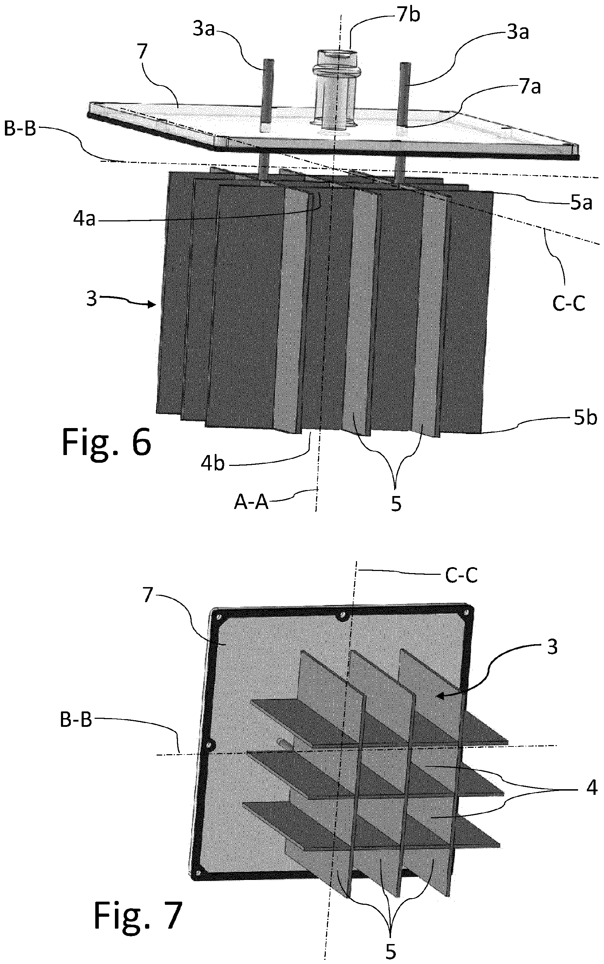

With particular reference to Figures 6 and 7, each electrode 3 is shaped to identify a plurality of channels 4. More in detail, the channels 4 extend between an upper opening 4a and a lower opening 4b along a longitudinal direction A-A and are arranged internally to the tank 2. The channels 4 are configured to be transverse to the free surface of the electrolyte solution. Preferably, in use, the channels 4 are orthogonal to the free surface of the electrolyte solution.

This is advantageous since, in use, the channels 4 being transverse to the free surface of the electrolytic solution facilitate the vertical evacuation of the gases produced within the electrolytic solution by electrolysis. In other words, the channels 4 may provide a preferred route for the gases to rise to the surface of the electrolyte solution. Advantageously, the channels 4 reduce the possibility of gas cavities forming near the electrodes 3, thereby increasing the efficiency and performance of the electrolysis process.

According to a preferred aspect, the channels 4 have a polygonal cross-section. With particular reference to Figure 7, the polygonal section is rectangular.

In one embodiment, the channels 4 are arranged spaced apart from each other along a first reference axis B-B and along a second reference axis C-C transverse to the first reference axis B-B to identify a grid of channels 4.

In particular, the channels 4 of each electrode 3 comprise a first group of channels 4 spaced apart along the first reference axis B-B and a second group of channels 4 spaced apart along the second reference axis C-C.

Preferably, the first reference axis B-B and the second reference axis C-C are transverse to the longitudinal direction A-A. Still preferably, the first B-B reference axis, the second reference axis C-C and the longitudinal direction A-A are orthogonal to each other.

In one embodiment, each electrode 3 comprises plates 5 extending between an upper end 5a and a lower end 5b along the longitudinal direction A-A. Preferably, the plates 5 are at least partially defined by the channels 4. In particular, the upper end 5a of the plates 5 is placed at the upper opening 4a of the channels 4, the lower end 5b at the lower opening 4b.

The plates 5 have a high resistance to corrosion and are preferably made of AISI 316 steel. Still preferably, each plate 5 has a thickness of not less than 1 mm.

Preferably, the plates 5 comprise a first group of at least three plates 5 spaced apart along the first reference axis B-B and a second group of at least three plates 5 spaced apart along the second reference axis C-C. The first group of plates 5 intersects with the second group of plates 5 to define the channels 4. More specifically, the plates 5 intersect at a 90° angle. In particular, the intersection of the plates 5 at an angle of 90° defines the rectangular polygonal section of the channels 4.

It should be noted that the number of plates 5 can be increased depending on the potential difference imposed on the electrodes 3 and the volume of the electrolyte solution contained in the tank 20 during use.

In addition, each electrode 3 comprises terminals 3a connected to the upper end of the plates 5a. In particular, the electrodes 3 are configured to connect electrically to a voltage generator by means of terminals 3a.

According to one aspect, the electrolysis device 105 further comprises a cover 7 arranged to close the upper access 6a of each compartment 6. The cover 7 has a fixing portion 7a and a withdrawal hole 7b configured to couple with a gas suction system 12. In particular, the withdrawal hole 7b is configured to allow the evacuation of the gases produced by electrolysis from the cavity 20 of the tank 2 to the gas suction system 12. The gas suction system 12 is configured to feed the gaseous hydrogen generated as fuel for the burner 102. In particular, the gas suction system 12 is configured to send the generated gaseous hydrogen to the injection conduit 112 of the boiler 100.

Preferably, the terminals 3a of the electrodes 3 connect each electrode 3 to the cover 7 at the fixing portion 7a. In detail, each electrode 3 is suspended by the terminals 3a inside the tank 2. More particularly, the lower end 5b of the plates 5 of each electrode 3 is at least six millimetres away from the connecting conduit 2a along the longitudinal direction A-A. This is advantageous as it allows to avoid transferring from one compartment 6 to another and mixing the gases produced by electrolysis.

Advantageously, preventing the transfer and mixing of the gases produced allows to increase the quality of the electrolysis products.

In the embodiment, the device 105 comprises a feed conduit 8 connected to the tank 2 and placed in fluid communication with the inside of the tank 2. The feed conduit 8 is configured to connect to a container, containing the electrolytic solution, to receive this solution and convey it inside the tank 2. Preferably, the feed conduit 8 comprises a shut-off valve (not shown in the accompanying figures) configured to regulate the flow through the feed conduit 8. In particular, the shut-off valve is configured to shut off the flow when a predetermined volume of electrolyte solution is present within the cavity 20 of the tank 2. Still preferably, the shut-off valve is configured to interrupt the flow of electrolyte solution when the free surface of the solution is at the upper end 5a of the plates 5.

In addition, the device 105 may comprise a proton exchange membrane (not shown in the accompanying figures) located at the connection between the connecting conduit 2a and the compartments 6. Advantageously, the proton exchange membrane ensures a higher quality of the gas produced, the physical impossibility of mixing the gases produced and the electrical isolation of the electrodes 3.

Preferably, the electrical potential difference imposed between the electrodes 3 is comprised between 1.5 and 5 volts with current intensity varying between 15 and 60 amperes. In particular, the control signal generated by the processing module 181 is representative of the value of electric potential difference imposed to the electrodes 3 of the device 105.

It should be emphasised that the current intensity varies according to the proportion between the volume of the cavity 20 of the tank 2 and the total number of plates 5 of the electrodes 3.

In one embodiment, the electrolysis device 105 comprises a safety thermostat (not shown in the appended figures) configured to detect the temperature of the electrolyte solution and interrupt the electrical connection of the electrodes 3 depending on the value of the detected temperature.

In addition, the device 105 comprises a switch 10 configured to interrupt the electrical connection between the electrodes 3 and the voltage generator. A user can interrupt the production of gas by interrupting the electrical connection between the electrodes 3 and the voltage generator by means of the switch 10.

The device 105 may also comprise a power port 11 configured to receive an electrical connector connected to the voltage generator. The terminals 3a of the electrodes 3 are configured to electrically connect to the voltage generator through the power port 11.

It should be noted that a device 105 made according to the present invention comprising a cavity 20 of the tank 2 having a gross volume of 1200 cc can produce 90 to 110 litres of gas per hour. This hourly production value is 10% higher than the production achievable with electrolysers of known type.

## Claims

1. Multi-fuel boiler (100) comprising:
- a burner (102) configured to receive and mix a fuel and an oxidizer;
- a heat exchanger (103) placed near the burner (102) and configured to connect to a plumbing (104), the heat exchanger (103) being configured to receive a fluid to be heated and to send a heated fluid from/to said plumbing (104);
- an electrolysis device (105) connected to the burner (102) and configured to generate gaseous hydrogen and feed the generated gaseous hydrogen as fuel for the burner (102).

2. Multi-fuel boiler (100) according to claim 1, comprising a mixing valve (106) connected to the burner (102) and to the electrolysis device (105), said mixing valve (106) being configured to receive and mix one or more gases and/or the gaseous hydrogen so as to generate a gaseous mixture and feed the gaseous mixture as fuel for the burner (102).

3. Multi-fuel boiler (100) according to claim 2, wherein said mixing valve (106) comprises an inlet portion (106a) suitable for connection with a gas distribution system, an outlet portion (106b) connected to the burner (102), a central portion (106c) connecting the inlet portion (106a) and the outlet portion (106b) and connected to the electrolysis device (105).

4. Multi-fuel boiler (100) according to claim 3, wherein said mixing valve (106) has a cavity (160) extending between a lower inlet (160a) located at the inlet portion (106a) and an upper outlet (160b) located at the outlet portion (106b), said cavity (160) of the mixing valve (106) having a narrowing (161) and a side opening (160c) at the central portion (106c).

5. Multi-fuel boiler (100) according to any one of the preceding claims, comprising:
- a modulating valve (107) configured to regulate the amount of fuel fed to the burner (102) and acquire concentration data (109) representative of the concentration of gaseous hydrogen in the fuel;
- a control unit (108) comprising:
- an acquisition module (180) in signal communication with the modulating valve (107) for receiving the concentration data (109) and configured to receive regulation data representative of a stoichiometric ratio;
- a processing module (181) in signal communication with the acquisition module (180) for generating a control signal based on the concentration data (109) and regulation data;
- an actuation module (182) in signal communication with the processing module (181) and the electrolysis device (105) and configured to modulate the generation of said gaseous hydrogen according to the control signal.

6. Multi-fuel boiler (100) according to any one of the preceding claims, wherein said electrolysis device (105) comprises:
- a tank (2) configured to contain an electrolytic solution;
- two electrodes (3) configured to be electrically connected to a voltage source and housed in the tank (2), each electrode (3) being shaped to identify a plurality of channels (4), each channel (4) extending between an upper opening (4a) and a lower opening (4b) along a longitudinal direction (A-A) and being arranged in the tank (2), said channels (4) being configured to be transverse to the free surface of the electrolytic solution.

7. Multi-fuel boiler (100) according to claim 6, wherein each electrode (3) comprises plates (5) extending between an upper end (5a) and a lower end (5b) along the longitudinal direction (A-A), said channels (4) being at least partially defined by said plates (5).

8. Multi-fuel boiler (100) according to claim 6 or 7, wherein said channels (4) are arranged spaced apart from each other along a first reference axis (B-B) and along a second reference axis (C-C) transverse to the first reference axis (B-B) to identify a grid of channels (4), said first (B-B) and second (C-C) reference axis being transverse to the longitudinal direction (A-A).

9. Multi-fuel boiler (100) according to claim 8, wherein the first reference axis (B-B), the second reference axis (C-C) and the longitudinal direction (A-A) are orthogonal to each other.

10. Multi-fuel boiler (100) according to claim 8 or 9, wherein the channels (4) of each electrode (3) comprise a first group of channels (4) spaced apart along the first reference axis (B-B) and a second group of channels (4) spaced apart along the second reference axis (C-C).

11. Multi-fuel boiler (100) according to claim 7 and any one of claims 8 to 10, wherein the plates (5) comprise a first group of at least three plates (5) spaced apart along the first reference axis (B-B) and a second group of at least three plates (5) spaced apart along the second reference axis (C-C), the first group of plates (5) intersecting with the second group of plates (5) to define said channels (4).
